# EUROPEAN PATENT SPECIFICATION

(11) **EP 2 781 666 B1**
(45) Date of publication and mention of the grant of the patent: **02.05.2018**
(21) Application number: 13159910.2
(22) Date of filing: 19.03.2013
(51) Int. Cl.: E03F 5/22, E03F 7/04, E03F 5/10

(54) **A method for preventing backflow of wastewater**
Verfahren zur Verhinderung von Abwasserrückstau
Méthode de prévention de refoulement d'eaux usées

(43) Date of publication of application: 24.09.2014
(73) Proprietor: DBE Lyngholm Aps, 2650 Hvidovre (DK)
(72) Inventor: Lyngholm, Jørgen, 2650 Hvidovre (DK)
(74) Representative: Hegner & Partners A/S

(56) References cited:
- DE-A1- 3 310 314
- DE-U1-202006 017 409
- DK-B1- 177 342
- US-A- 2 739 662
- US-A- 3 020 922
- US-A- 4 815 492

## Description

### TECHNICAL FIELD

The present invention provides a method for preventing backflow of wastewater into a sewer pipe, the backflow e.g. resulting from excessive rains, storms, floods, or ground water upheavals. The backflow prevention method is suitable for preventing backflows in a sewer pipe servicing an individual building or group of buildings in order to minimize the risk of backflow of e.g. faeces contaminated wastewater, termed sanitary wastewater into the building space, such as a cellar. The method is further suitable for preventing backflow of wastewater into a sewer pipe, e.g. a communal sewer pipe servicing two or more sewer pipes, e.g. inside a city sewage system. Further, the method is suitable for only sanitary sewer pipes as well as combined, i.e. sanitary and rain water sewer pipes.

### BACKGROUND ART

During at least the last two decades the world has experienced climate changes in many forms. A number or water damages is a consequence of these climate changes due to the increased rain volumes from the larger number of high intensity storms and hurricanes, and a resulting raise in ground water and sea water levels. Also, a heightened focus has been on the risk of tsunamis.

Internationally, the super-storm Sandy left a trail of destruction along the US east coast, also destroying buildings, causing fires, electrical installation blackouts, and the like. Also Denmark have experienced at least two major torrential rain incidents over the last three years, resulting in wide spread damage to cellars and building constructions, to sewer pipes, as well as to household effects being sewage contaminated. Increased health problems also result from this and add to the increasing insurance expenses.

Until now, in Denmark and internationally, there have only been a few and mainly local incentives in order to try to minimize this water flood risk in particular for residential and industrial buildings, and in particular against sewage contaminated wastewater into the buildings, in particular into the cellars of the buildings, which lies below ground level.

Herein, wastewater is defined as effluent water adversely affected in quality by containing municipal waste, such as human activities waste comprising dishwasher waste, washing machine waste, bath waste, and toilet waste, optionally comprising urine and faeces, or such as institutional, commercial, and light industrial activities waste, such as swimming pool waste, kitchen waste, cleaning waste, but does not include effluent water containing farming or heavy industries waste, such as oil or chemical products. There is a backflow condition present in a gravity influenced, slanted sewer pipe when the gravity induced wastewater flow inside is hindered by a counter flow, which results from rising waters on a lower positioned end of the sewer pipe. Some backflow prevention systems comprise valves positioned inside individual cellar drains, inside individual toilets, and/or inside individual household sewer pipes. But these attempts all rely on the unsubstantiated hope that the building foundations, walls, toilets, and sewer pipes are able to withstand the resulting outside water pressures from rain or groundwater. However, very few buildings, toilets, or sewer pipes have until some years ago been dimensioned to withstand such increased outside water pressures.

A number of backflow prevention methods rely on closing down a part of the sewer pipe, e.g. by valve arrangements when sensors in the sewer pipe sense a backflow. Some examples of these methods can be found in patent DE 33 13 458 and application DE 1020 100 369 16.

In multi-story dwellings, larger institutions, or for larger industrial buildings, such shutting down of a part of one or more sewer pipes and therefore stop the flushing function may be a disadvantage, because due to the larger total amount of wastewater produced, these buildings often require continual or at least regular flushing of sewage into a communal sewage system in order to function safely. Thus, another type of backflow prevention systems have been conceived which further include a pump for pumping out the sewage even during the backflow condition. Optionally, the systems comprise one or more grinder pumps for cutting up the larger particulates. Examples of these systems are disclosed in US 4,272,640, DE 33 10 314, and EP 2 447 429. These systems require increased maintenance due to its regular use during normal operation, and this may provide an unhealthy work environment for maintenance personnel.

US 4,815,492 describes a flood control system for installation inside and under a building cellar, comprising entry and exit sewer pipes for a tank for holding and transferring the household sewage. Inside the tank is provided a high pressure grinder pump and a closing valve, and the tank is provided with a high pressure sewage exit pipe. This system require the rebuilding of the entire sewer pipe and cellar, and further the construction of heavy building foundations for holding back the rain or groundwater and at the same time build up pressure to redirect the sewage back into the sewers. The system requires constant power supply and constant pressure. Further, it is not in general healthy or safe to store such larger tank amount of daily sewage, which creates gas in larger amounts inside such closed tank.

It has generally been left to the communal sewage systems to stay performing during floods. However, these have not been dimensioned for increased water pressures, and the gully systems are often only suitable for transporting "normal" amounts of rain. Further, many countries and local authorities may have tended to leave sewers last in line for renovations due to cost reduction purposes. Obviously, renovating and extending the sewer system volumes is favourable, but renewing and/or increasing the sewer pipe volumes or numbers, for example in the Copenhagen area, is neither practically solvable due to financial and physical space considerations, nor is it convenient when using present day sewer engineering technologies.

WO 2013/037372 describes an alternative drainage unit for drain off faecal and/or not faecal water from a building.

Accordingly, it is an object of the present application to provide an alternative to the prior art methods of backflow prevention, which alleviates some or all of the above disadvantages of the prior art methods.

### THE INVENTION

This has been achieved by the method as defined in the appended claim 1 and its dependent claims, using a system defined in claim 1. A commonly held belief within the field has been that the inflow of excess water is a problem in itself. The method according to the invention allows an increased and preferably controllable amount of water from outside, e.g. from heavy rain, to enter into the system and influence the system positively:
Firstly, the method according to the invention allows for the, preferably controlled, removal of smaller to larger amounts of surplus water, e.g. rain water, from the sewage system, by removing not only wastewater, but also a part of the inlet water itself. This decreases the back flow pressures experienced on other parts of the sewer pipe surroundings, in particular on the foundations of the building behind, around or onto the sewer pipe or the sewage system in question. This also helps to uphold the integrity of these. Depending on collection chamber volume V_{c}, which may be in the order of about 5 m³ to 200 m³, or even larger, the use of the available space inside the collection chamber further helps to bring down the locally experienced volumes of rain water, which reduces the impact on and damages to the gutters, sewer pipes, building sides, and the top side of the sidewalks, roads, and gardens. This is in particular so, when the container of the system is preinstalled, i.e. the system is retrofitted to an existing well or man-hole.

Secondly, the inclusion of a water inlet, preferably adjustable, allowing further water into the wastewater reduces the risk of gas formation in the system during backflow conditions. During the time period where the closure valve is blocked, a reduced amount of gas builds up inside the container. This reduces the risk of explosions or fires inside the system. Even during normal operation of the sewer pipe, i.e. when no backflow condition is present, the risk of gas or odour formation is low due to the fact that the area of the overflow opening is small relative to the total volume of the container.

Thirdly, the addition of relatively clean water at least compared to e.g. faeces containing sewage water reduces the risk of unintended blockage inside the sewer pipe by e.g. used paper towels etc. This reduces the health risks which users and maintenance personnel are exposed to, if or when they enter into the system, before, during and/or after use in a flood situation.

Further, the system does not require a continual power supply when not in function. This is contrary to e.g. continually pressurized toilets, sewer pipes, and the like. This is due to the fact that the pump and valve is only operating during system use, e.g. during floods, as gravitational flow in the sewer pipe is allowed during normal operation of the sewer pipe, i.e. when the present system is not in use.

The method may also be suitable for reducing the risk of clogging in the sewer pipe during its normal operation, i.e. not during backflow conditions. Further, during use, e.g. during floods, the method allows for a continual removal of the wastewater in a sewer pipe leading from the building or from a sewer pipe in a communal sewage system, which the present system is provided in connection with.

The buildings having sewer pipes for which the method according to the invention is particularly suitable, are buildings housing or containing more than one group of people. A plurality of families or a plurality of persons in e.g. institutions, hospitals, hotels, or buildings housing a number of persons during specific hours, such as company dwellings, high-risers, sports arenas, etc.

The method is also applicable in assemblies of more than one sewer pipe in e.g. a local or regional city sewage system in order to prevent backflow into other parts of the sewage system. The method is also suitable in servicing a number of sewer pipes, such as intersections of pipes. For example, the present system is envisaged inside the public sewage system, in particular in intersections between sewer pipes servicing a plurality of single family homes on a country road, or servicing a plurality of single or multi-story dwellings, e.g. along city streets.

The method is in particular advantageous in combined sewers. Some countries allow combined sewers, while other countries use separated sewers, such as into either sanitary sewers or into other water sewers.

EP 1 923 515 describes a backflow prevention system for a building. It comprises a container, namely an existing man hole, where incoming excess rainwater is pumped up onto higher ground, while the wastewater sewer pipe is blocked by a closure valve. Thus, the continuous function of the sewer pipe is not upheld, and the rainwater is regarded as being part of the problem, not part of the solution as in the present system. A further water inlet is not provided.

In one embodiment of the claimed invention, said water inlet is one or more of the group including b) a further sewer pipe, c) a gutter pipe or entry, d) a rain water down pipe, e) a floor drain pipe lead, f) a groundwater one-way valve, g) a tap water line and h) a control valve on or after the closure valve.

If further water is added into the system during use inside the first sewer pipe, a separate inlet may be provided in addition, if suitable. This reduces the complexity of the system. Further, if also provided inside the sewer pipe, the further water helps in easing the transport of the contaminated wastewater and helps cleaning the inside of the sewer pipe itself.
b) A further, second sewer pipe adds or directs relatively clean water, such as rain water, washing machine water, or tap water to the present system. It may be mixed at an intersection of the two sewer pipes and/or after at least one of them, and may be provided also with an overflow opening or down drain leading inside the at least first collection chamber.
c+d) The system may be provided inside an existing man hole, or at least provided below the side walk, or below the road beside the building or buildings being served by the system. One solution is to provide overflow gutter water to the at least one collection chamber, where the water inlet comprises a gutter screen, and/or a gutter pipe, and/or a rain water down pipe extending down into the collection chamber.
e) E.g. when the system is servicing buildings with one or more cellars, it may be an advantage to lead any water entering into the cellar, e.g. drains which are connected to the present system directly or by gravitational pipes can lead extra water to the collection chamber.
f) In particular in areas where there is a risk of rising ground water, it may be an advantage to provided one or more one-way valves, e.g. in the container side wall, optionally comprising one or more pumps, pipes or the like. This allows for a controlled in-seeping of ground water into the collection chamber.
g) In areas, where water generally is scarce, but where floods are experienced occasionally, e.g. river floods, it may be an advantage to manually or automatically add tap water in the further water inlet during the floods. Further, a tap may be suitable if the container is provided at a level above ground, e.g. in rocky areas. The tapped water may be collected flooding water, the system optionally comprising a water inlet pump for pumping flood water up into the container.
h) A control valve may be provided on or after the closure valve, for leading a controlled amount of water flow in from the backflowing water in the same sewer pipe. This releases a part of the pressures experienced on the downstream side of the sewer pipe.

Thus, depending upon the specific type of building or sewer pipe being serviced by the method, and upon the specific positioning of the collection chamber relative to the sewer pipe or pipes the system services, one can design any suitable combination of the above further water inlets.

By the invention it has been realized, that the method can be further utilized for an improved sanitation after the backflow condition has ended. One or more such water inlets in the form of b) a second sewer pipe, c) a gutter entry, d) a rain water down pipe, e) a floor drain pipe lead, f) a groundwater one-way valve, and/or g) a tap water line is suitable for post-condition cleaning of the inside and opening 144 of the sewer pipe, of the container's inner side wall, the outer surfaces of the pump/s and pressure pipe/s, and/or the inside bottom wall of the container by allowing in a suitable volume of water from this or these inlets for a suitable cleaning time period.

In one embodiment of the claimed invention, it comprises a plurality of sewer pipes, preferably said at least one overflow opening of the at least one, a plurality, or all of the sewer pipes is provided at an intersection of said plurality of sewer pipes. Thus, the system can service any selected number of buildings, such as a plurality of single or multi family houses along a road, or it is suitable for servicing a number of sewer pipes in a communal sewage system. This is an advantage in city areas, where the number of existing sewer pipes per area is relatively large, and thus the total number of containers of the present system can be reduced.

In one embodiment of the claimed invention, the at least one water inlet is adjusted as to the volume of water allowed in per time unit, and preferably said at least one water inlet is initiated and/or is adjusted according to selected levels of wastewater inside the at least first container. By being adjustable, the water inlet volume per time unit can be controlled, and thus the system is adapted for regulating the total volume of water inside the collection chamber at any time during a backflow condition. By adjusting relative to the level of wastewater inside, the inflow of water from the inlet can also be turned off when the wastewater level reaches a specified level. The adjustment may in one embodiment be relative to the entire volume of the at least one container, and/or in accordance with the pressure of the backflow. This reduces the risk of wastewater flowing out from the top opening of the container during very heavy water flows. This also reduces the water load and pressures experienced on the system and on the building foundations, the communal sewage system, and so forth.

In one embodiment the volume Vₒₒ of said at least one collection chamber below the at least one overflow opening is at least 2 m³, such as at least 5 m³, such as at least 10 m³, such as at least 20 m³, such as at least 50 m³, such as at least 100 m³; and/or the height h between the at least one overflow opening and an inside bottom wall of the at least first container is at least 25 cm, at least 50 cm, at least 1 m, at least 1.5 m, at least 2 m, at least 2.5 m. Of course, the volume V_{c} of the collection chamber in total, Vₒₒ and the height h can be selected according to expected needs. A larger container volume V_{c} may hold and thus remove a larger volume of rainwater. However, such larger volume V_{c} may entail a larger height h or height H from opening up to the container top, which may be a disadvantage in hindering maintenance personnel access, and increasing the amount of splatter of wastewater from the overflow opening on the side walls of the container.

In one embodiment the at least one closure valve is provided at a distance D to said overflow opening along the length of the sewer pipe, said distance D lying in the order of between around 10 cm and around 1 m, preferably between around 25 cm and around 50 cm; or where said closure valve is provided at a distance D to said overflow opening which is equal to or smaller than an opening diameter dₒ of said overflow opening along the length of the sewer pipe, and preferably said opening diameter dₒ is equal or larger than the cross sectional diameter of the at least one sewer pipe. This reduces the risk of clogging the sewer pipe between the overflow opening and the closure valve, when the valve is opened again after use. The design of the selected closure valve can be chosen such that this distance D is made yet smaller. The distance D is equal to the length between the side wall of the overflow opening lying closest towards the closure valve and the point on the sewer pipe where the closure valve is active inside the sewer pipe. Further, when the distance D is equal to or larger than the overflow opening diameter dₒ, the wastewater volume overflowing from the opening per time can be better controlled, in particular if the overflow opening diameter dₒ is equal to or larger than the cross sectional diameter of the sewer pipe. The overflow opening diameter dₒ is measured as the distance between the sides of the holes extending longitudinally along the sewer pipe.

In one embodiment the at least one closure valve is a non-return valve, such as a one-way valve, and is preferably motor operated in order to obtain a closure force over the pipe section area which is at least larger than an experienced pressure of the backflow, preferably the closure valve is a backflow blocker of type 3 in the European Standard DS/EN 13564. If the wastewater also contains larger particles, such as e.g. lumps or faeces and toilet paper, then regulation is often at hand, which requires such backflow valve to operate at given design values in order to assure that no faeces returns back into the sewer pipe and into e.g. the cellar and becomes a health issue.

The closure valve/s is/are preferably of a type and construction, which adhere to the European Standard for faecal lifting plants in "Wastewater lifting plants for buildings and sites - Principles of construction and testing - Part 4: Non-return valves for faecal-free wastewater and wastewater containing faecal matter" DS/EN 12050:4.

The closure valve/s and/or system is/are preferably of a type and construction, which adhere to the European Standard for "Anti-flooding devices for buildings - Part 1: Requirements", DS/EN 13564:1, specifying types and requirements for materials, performance, design, construction and marking for factory made anti-flooding devices for faecal and/or non-faecal wastewater for use in drainage systems of buildings operating under gravity in accordance with DS/EN 12056:1, preferably a type 3 blocker.

In one embodiment of the claimed invention, the at least one closure valve is unblocked again when a pressure sensor senses the pressure of the backflow being at least equal to the wastewater flow pressure at the overflow opening, optionally the pressure sensor is provided at the overflow opening. This reduces the total power needed to operate the system during its use, and thus reduces the requirement for added emergency power supply. This is possible, because when the flow pressure inside the wastewater at the overflow opening is equal to or larger than the backflow pressure, no backflow will in fact occur, when the closure valve is unblocked.

In one embodiment the at least one overflow opening is provided in a top part of said at least one sewer pipe and/or the area of the overflow opening is comparable in size to the cross sectional area of the sewer pipe. Thus, the risk of the wastewater overflowing outside the periods of use of the system is reduced, while at the same time a simple construction is provided. Other elements, such as an overflow pipe or valve may also be provided over the overflow opening in order to better guide or control the overflowing wastewater into the collection chamber. However, these elements are supplemental, and may lead to an increased risk of clogging therein.

In one embodiment the at least one overflow opening is provided with at least one loose lid, hinged flap, or open screen over said opening, and/or the area of the opening is comparable in size to the cross sectional area of the sewer pipe, preferably said lid is substantially horizontally plane. With a flap, the odours and gases from the wastewater may during normal use of the sewer pipe be reduced. With a screen, the risk of rodents entering into and out from the sewer pipe is reduced.

In one embodiment of the claimed invention, the least one collection chamber is a closed chamber, preferably adhering to the European Standard DS/EN 13598-2. Thus, the gases and odours produced by the wastewater is kept inside the collection chamber during normal use, and during backflow when the system is in use, the increased amounts of wastewater and thus increased amounts of gases are held back inside the closed chamber, which also reduces the risks of gas explosions outside the chamber.

In one embodiment of the claimed invention, the container comprises at least two chambers, namely said at least first collection chamber accommodating the at least one pressure pipe, the at least one pump and at least in fluid communication with the at least one overflow opening on the at least one sewer pipe, and at least one further valve chamber accommodating at least part of the at least one closure valve. This may minimize the risk that any gas explosion from the sewage content inside the pump area can compromise the closure valve functionality. In one embodiment of the system, the at least two chambers are fluid and/or gas tightly separated from each other, preferably by a containment wall. In one embodiment of the system, the at least one further chamber is protected against rodent entry. I.e. the wall and openings therein are made less penetrable by e.g. rats by proper selection of materials used, by reducing number holes and by choosing their position higher in relation to this fact.

In an alternative embodiment of the claimed invention, the at least one container comprises only one chamber, namely the first collection chamber. When only one chamber is provided inside the container, the number of system components can be reduced, which is cost effective. In this embodiment, the closure valve may advantageously be provided outside the at least one collection chamber, in order to reduce the risk of gas explosions influencing the functionality of the closure valve.

In one embodiment the at least one pump is initiated and/or controlled by level sensor/s at one or more specific wastewater levels in said collection chamber. Today, many pump manufacturers provide level sensors within the pump itself, or alternatively, a level sensor is provided separately for controlling the pump function, e.g. by switching the pump on at one specific wastewater level above zero, or increasing the pump volume at a certain other higher level.

When the wastewater comprises faeces, the pump/s and pressure pipe/s is/are preferably of a type and construction, which adhere to the European Standard for faecal lifting plants in "Wastewater lifting plants for buildings and sites - Principles of construction and testing - Part 1: Lifting plants for wastewater containing faecal matter" DS/EN 12050:1.

In one embodiment there is provided a plurality of pumps, and/or preferably comprising at least one high-pressure pump providing a pressure equal to or more than 5 m of water, preferably said pump or pumps are adhering to the European Standard DS/EN 12050:1. The number of pumps needed, and the pressures at which they operate depend upon how many volumes of wastewater is to be lifted to which height above the pump/s, and can be selected according to installation needs.

In one embodiment the at least one pump is a grinder pump. In particular faeces containing wastewater comprises particulates, which advantageously can be grinded before being pumped on into the pressure pipes. This reduces the chances of clogging the pressure pipes during system use.

In one embodiment of the claimed invention, the at least one pump is adapted for pumping at least while the closure valve is blocked. Thus, even if excess water, such as rain water, enters into the container, there may not be a backflow state in the sewer pipe, and therefore there is no need to start the pump or pumps. The (rain) water may just fill up into the container without affecting the system or its function. This may only become a problem, if or when the water level reaches the level of the at least one overflow opening, in which case wastewater may spill over and contaminate the rainwater to levels above regulatory values. In this case, it is an advantage that the overflow opening is provided with a level sensor for initiating the pump of the system. Further, the pump may be adapted to be automatically shut off, when the pressure of the backflow is equalized, and the closure valve is unblocked. According to the claimed invention, the at least one pressure pipe is connected to a communal sewage system, via a flushing well. Thus, the wastewater can be safely transferred into the larger capacity communal sewer pipe, even where restrictions concerning pressure systems are laid upon such communal systems. A flushing well, e.g. comprising a buffer media such as sand or gravel, effectively reduces the exit pressures. In one embodiment of the system, the at least one pressure pipe is connected to a top surface, and/or to a side surface and/or to a bottom surface of said communal sewer pipe.

In one embodiment of the claimed invention, it further comprises communal and/or local emergency power supply for supplying said at least one pump and/or said at least one valve, where said local power supply comprises one or more from a selection of a diesel generator, a diesel motor, a battery element, optionally for regeneration, optionally with a solar cell. Since the backflow prevention system is intended to work mainly during emergency conditions, it is an advantage to have provided emergency power supplies proximally to the system, e.g. within the system. In CE marked closure valves, the manufacturers may provide e.g. a battery pack integral with the valve device. CE marked pumps may be provided with an integral diesel or other generator. Preferably, the emergency power supply is provided inside the container in a part not easily exposed to humidity, e.g. the top part of the container, and if provided outside the container, the supply is preferably provided outside the reach of water, e.g. in the ground or alongside the container.

In one embodiment of the claimed invention, said emergency power supply is provided inside said at least one further chamber. The further chamber is preferably both gas and water tight. Thus, the power supply and the closure valve are provided more protected against external influences, in particular moisture.

In one embodiment of the claimed invention, the at least one collection chamber does or does not accommodate at least part of said at least one sewer pipe. For example, a container may comprise a manhole or access well, where the collection chamber may house the sewer pipe to be serviced, where the sewer pipe is provided entering by one container side wall, spanning the space between the side walls, and exiting by the opposite container side wall. If the container is provided at some time after the installation of the sewer pipe or s, it may be an advantage to install the container between two or more sewer pipes, such that only the overflow openings of the sewer pipes in fact tangent the outside of the container side wall, to provide a system effective to service several sewer pipes simultaneously.

In one embodiment there is provided two or more containers, such as a first container and a second container, provided for said at least one or more sewer pipes. This is an advantage, for example when there is limited digging space in the ground for accommodating one large container and more room to install two or more smaller size containers, either sequentially or in parallel with each other.

In one embodiment of the claimed invention, at least a section of the at least one sewer pipe is de- and/or re-mountable, and preferably provided in a part of the sewer pipe extending between inner side walls of the container, more preferably between one inner side wall of the container and the closure valve, optionally between one inner side wall of the container and the containment wall. Thus, the de- and/or re-mountable part of the sewer pipe can be taken out from the system and cleaned thoroughly after the closure valve has been blocked, in order to clean out the sewer pipe part, or the sewer pipe part can be exchanged by a new pipe part, when needed, e.g. after wear, which eases maintenance and versatility of the system, and enables refitting the entire system with exchangeable parts.

### BRIEF DESCRIPTION OF DRAWINGS

The invention will be explained more fully below in connection with a preferred embodiment and with reference to the schematic drawing in which:
Fig. 1A and 1B show a side and top view, respectively, of the same first embodiment of a backflow prevention system according to the invention;
Fig. 2 shows a top view of a second embodiment of a backflow prevention system according to the invention; and
Fig. 3 shows a side view of a third embodiment of a backflow prevention system according to the invention, connected to a communal sewer pipe.

The figures are schematic and simplified for clarity and merely show details which are essential to the understanding of the invention, while other details are left out. Throughout this document the same reference numerals are used for identical or corresponding parts.

Further scope of applicability of the present invention will become apparent from the detailed description given hereinafter. However, it should be understood that the detailed description and specific examples, while indicating preferred embodiments of the invention, are given by way of illustration only.

### DETAILED DESCRIPTION

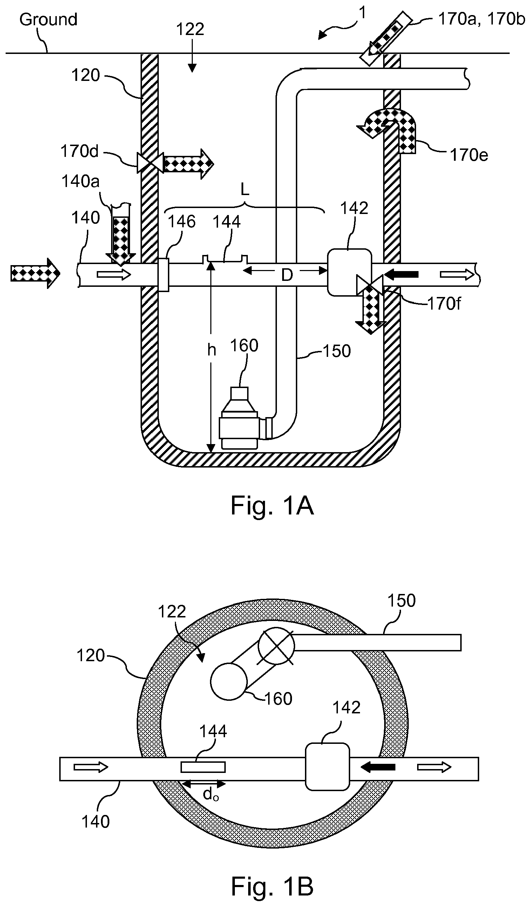

Fig. 1A and 1B show a side view and a top view of the same first embodiment of a backflow prevention system 1 according to the invention, which comprises a first container 120 surrounding a collection chamber 122, wherein is provided a sewer pipe 140 with a closure valve 142 and an overflow opening 144, optionally with a lid, positioned at a distance D, 10 cm between each other and provided at a height h, 2 m above the container bottom, i.e. providing a volume Vₒₒ, 3,14 m³, under the overflow opening 144. A pressure pipe 150 is connected to a pump 160 for pumping overflowing wastewater up and out from the container 120 at least during backflow conditions, where the container volume V_{c} is capable of holding the overflowing wastewater. At least one water inlet or entry device 170, 170a, 170b, 170c, 170d is providing a certain volume of water per time unit inside the collection chamber at least during backflow conditions, where the water inlet can be selected from one or more of any of said entry devices 170, 170a, 170b, 170c, 170d.

The container 120 is positioned in the ground outside a building, e.g. under the sidewalk or a road besides the building. The sewer pipe 140 is a sanitary sewer pipe which leads out from the building and inside the ground under the street and joins a larger sewer pipe (not shown) in order to lead any sanitary waste water away from the building and onwards into the communal sewage system. During normal operation of the sewer pipe 140, where no backflow condition is present in the pipe, the system is not in operation and there is a free gravity induced wastewater flow inside the slightly slanting sewer pipe 140, i.e. having a slight angle to horizontal (not shown, but intended to be implicit), when someone in the building discharges wastewater. In an alternative, the sewer pipe is not servicing a building, but instead services two or more similar or non-similar sewer pipes, e.g. under the middle or end of a road leading to a number of buildings.

As shown in Fig. 1A, the first container 120 comprises a side wall and an inside bottom wall, and may have an opening at the top in order to e.g. allow easy maintenance access. The open ended top part may further be provided with a tank top lid (not shown). Alternatively, the container could be entirely closed in. The container 120 may be made from any suitable material comprising steel, aluminum, plastic, composite, or a mix of these. The container 120 may have any suitable physical shape, such as vertically or horizontally cylindrical, elongated along the extension of the sewer pipe, for example, tubular, box-shaped, compartmentized, extending with or without an angle to horizontal, and the like, which shape and position should allow a suitable volume of wastewater and/or other water to be collected within the container 120 and suitable for its function and its positioning within the ground. The number of openings in the wall of the container 120 may preferably be kept to a minimum in order to reduce the risk of unintentional exit or entry of water and/or gas.

As shown in Fig. 1A and 1B, the sewer pipe 140 extends through the container from one side wall to another side wall, and spans eccentrically a container diameter of 2 m, thus the sewer pipe 140 is exposed in a length of approx. 1.6 m, and in a height of 2.5 m from the underside of the pipe 140 to the bottom floor or the container 120, having itself a height of 5 m, and thus a total collection chamber volume capacity of around 15.7 m³.

The pipe 140 enters into the collection chamber 122 for leading wastewater away from a building complex (not shown) situated to the left of the container 120 as seen in figure 1A, 1B, through the collection chamber, and out through the container wall towards a communal sewer pipe (not shown) to the right of the container 120. The number, size, shape, materials and dimensions of the sewer pipe/s are preferably according to building standards and regulations in force at the site of the system, and are known to the skilled person within in the field of that site, and often the result of an analysis as to the wastewater capacity needed for the building or buildings in question.

As shown in Fig. 1A and 1B, the sewer pipe 140 is provided with a closure valve 142 for blocking the wastewater flow and a wastewater overflow opening 144 in a top part thereof allowing for the subsequent overflow out from the sewer pipe 140 during a backflow situation, indicated by the black arrow going to the left in the figure 1A, and sensed by e.g. a sensor (not shown) within the closure valve or a separate sensor inside the sewer pipe. During normal operation, i.e. while no backflow pressures prevails on the right side of the sewer pipe in the figure 1A, the closure valve 142 is unblocked and allows for the free flow of wastewater through the sewer pipe 140, which results in no overflow from the overflow opening 144.

The overflow opening 144, a rectangular hole having a longitudinal diameter dₒ of 20 cm and a transversal diameter of 8 cm, is provided in a top part of the sewer pipe 140, which has a pipe diameter of 15 cm. The number, shape, and size of the overflow opening and of the sewer pipe can be decided on installation, according to use, position of the sewer pipe inside the first chamber, number and mutual positioning of the sewer pipes, and so on.

A part of the sewer pipe 140 is replaceable. A flange 146 is provided around the pipe 140, which flange, at one side wall end, is provided with an internal tread mating with an external thread at this end of the pipe 140, and the other internal flange end is smooth and surrounds the pipe part extending from the container side wall. Other re- and/or de-mountable designs are conceivable to the skilled person. At the valve end of the pipe 140, the pipe 140 is entered into a matching hole in the closure valve house, optionally with mating threads, and thus easy to install and remove.

In Fig. 1A the opening 144 is provided upon the sewer pipe 140 near the closure valve 142, the inner side of the opening 144 being placed around 10 cm from the valve 142. This allows for the sewer pipe 140 both to carry the weight of the closure valve and not break, and for reducing the risk that the function of the system and sewer pipe after a backflow condition is hindered by paper towels and other particles clogging the pipe interior between the opening 144 and the valve 142. In an alternative, if the pipe 140 is not able to support the closure valve by itself, the closure valve 142 is further supported by a support structure (not shown), resting on the container side wall or walls, bottom floor, pressure pipe 150, pump/s 160, or containment wall 180, see below.

When backflow occurs, the inbuilt sensor initiates a blocking of the closure valve 142, the wastewater rises inside the sewer pipe 140 and flows out from the opening 144 down around the side surface of the sewer pipe 140 and drips or falls down onto the bottom floor of the container 120, and starts gathering in the bottom of the container 120. The wastewater rises inside the chamber 122 of the container 120 and at a given level, determined by the position of the pump and/or pump initiating sensor, triggers the action of the pump 160, the suction part of which is provided at a position near the lowest point of the floor of the container 120. An advantage of the present system is that at the same time when the wastewater overflows, there is an inlet of surplus water into the collection chamber of the container 120 from the further water inlet/s 170. The pump 160 pumps at a steady or intermittent flow a portion of the mix of wastewater and extra water into the pressure pipe 150 and away from the container 120 and onwards towards the sewage system. As long as the backflow sensor registers a backflow pressure, and there is a certain level of wastewater mixture inside the collection chamber the pump 160 is on. When there is not a backflow condition in the sewer pipe 140 after the closure valve 142 any more, it is unblocked, and no more overflowing wastewater is supplied from the overflow opening 144. The pump 160 continues to pump as long as there is liquid to pump from the bottom of the collection chamber 122. If water is still supplied hereto from one or more further water inlets 170, which do not supply via the sewer pipe 140, this water may be used for cleaning the collection chamber 122, and/or may be turned off manually or automatically.

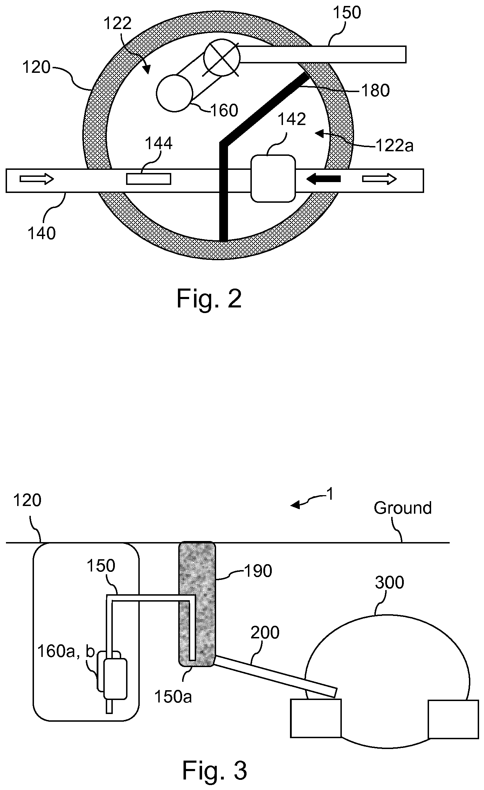

In Figs. 1A, 1B and 2 the closure valve is provided entirely within the container 120. In an alternative or as supplement, the at least one closure valve can be provided outside the collection chamber, and/or even provided in the side wall of the container 120.

The closure valve 142 is a non-return valve of a construction complying to the European Standard DS/EN 12050:4 such that the system can comply with the European Standard DS/EN 13564:1, see above. Also, the closure valve 142 is small in size and light weight, in order to fit inside the closed space and increase maintenance ease. Preferably, a motor operated closure valve is utilized in order to safeguard against unintentional backflow or leaks through the valve. Backup or emergency power supply for the motor is provided in a battery pack inside the check valve 142. Many suitable designs and manufacturers of closure valves are available on the market, such as available from the manufacturers Kessel, ACO, or Wiega, some comprising more than one closure valve part, and some entailing that a part of the sewer pipe is removable, whichever may be selected if suitable for the design requirements.

There may be provided more than one overflow opening along the length of the sewer pipe 140, which may extend farther or shorter along the length of the sewer pipe and/or wider or narrower over the top than the opening 144 shown in Fig. 1A and 1B, and may have any suitable size and/or shape. Further, there may also be provided one or more overflow guide pipes or ducts (not shown) over the opening extending down towards the bottom side of the container 120. The overflow opening 144 may comprise a lid (not shown), e.g. a lightweight flap, optionally hinged, allowing to be moved away by the pressure of any overflow, for reducing the odours, or an open screen to hinder rodent exit therefrom or entry therein.

As shown in Fig. 1A, the overflow opening 144 is provided at a height h above the bottom wall of the container, thereby creating a volume Vₒ underneath the opening 144 in the collection chamber 122. In the Fig. 1A, which is not drawn according to measurement, the height h is 1.5 meters, and the volume V_{c} is 50 m³. This height, as well as volume V_{c} is of course selectable according to the need based on expected volumes of wastewater overflowing per time unit, i.e. dependent upon opening 144 area, pipe section area, flow of wastewater, expected volumes of water inlet, e.g. rain water, per time unit, and expected time before emergency personnel is able to arrive and service the system before the wastewater overflows the container, as well as to the installed pump capacity of the system. A small height h, e.g. less than the diameter of the cross section of the sewer pipe, increases the risk of a rapid turning on and off of the pump 160, increasing the risk of it overheating. However, a large height h, e.g. larger than the diameter of the collection chamber may hinder easy access into the container 120, and may contaminate a large area of the inner container walls when splattered by overflowing wastewater. Conceivable heights h between the overflow opening 144 and an inside bottom wall of the container 120 can be at least 25 cm, at least 50 cm, at least 1 m, at least 1.5 m, at least 2 m, at least 2.5 m, depending on container volume, pipe section diameter, and number of water inlets 170 provided.

As shown in Fig. 1A and 1B, the pressure pipe 150 is connected to the pump 160 for supplying the mix of wastewater and inlet water thereto at least during backflow conditions. The number, capacities, and types of pressure pipes and pumps can be selected according to needs. Preferably, the pumps, pressure pipes, and the system according to the invention comply with the European Standard DS/EN 12050:1, see above. High pressure pipe(s) and high pressure pump(s) may be utilized, where high pressures are pressures equal to or above 5 meters of water. There are many manufacturers of suitable pumps, such as Grundfos, ACO, Kesmi, and Flygt. Emergency power supply for the pump 160 is provided by electrical power lines (not shown) to a diesel generator (not shown) provided externally to the container 120.

Further, the system and its parts also preferably should adhere to any local building and sewer construction regulations, such as the Danish instruction SBI-185 "Sewer Installations".

As shown in Fig. 1A, a water inlet 170 is provided in order to provide an extra amount of water, the flow inside of which is schematically indicated on the figure by arrows. Different types and positions of water inlets 170 are envisaged, and can be combined and added as needed. It may be provided as a flow inside the sewer pipe 140, i.e. where the sewer pipe is the water inlet 170. Or the inlet 170 is an interconnection on the building side of the container between a rainwater down pipe, a singular rain water or other wastewater sewer pipe 140a, or the like, and the sewer pipe 140. Thus, during use under a backflow condition, and/or alternatively during normal use of the sewer pipe, the sewer pipe provides a mixed flow of wastewater and further water let in by the water inlet/s 170.

As also shown in Fig. 1A, the water inlet is a gutter pipe 170a and/or a rain water down pipe 170b from the building roof entering into the top opening of the container 120. The water inlet may also be a hole in a lid or cover (not shown) covering the top opening in the container 122.

As also shown in Fig. 1A, the system comprises at least one floor drain pipe lead 170c as water inlet 170. This can be an advantage, e.g. if the floor drain itself is situated above the level of the sewer pipe 140, which may often be the case, e.g. in single family homes having semi buried cellars, or having cellar windows close to the ground and a risk of rainwater entering into these windows.

As also shown in Fig. 1A, the system comprises a groundwater one-way valve 170d, provided in the container side wall, bottom wall or optional top lid. This may significantly reduce the outside groundwater pressures on the outside of the container and also on e.g. building foundations and pipes in the ground around the container.

As also shown in Fig. 1A, the system comprises a tap water line 170e, e.g. a manually or automatically operated water faucet delivering relatively clean tap water. Alternatively or additionally, a shower device is also conceivable. The water line 170e is positioned in the container side wall near the top opening of the container 120. Another type of inlet is a control valve 170f provided on or after the closure valve 142, allowing the controlled inflow of the backflowing wastewater downstream the sewer pipe 140.

All of these water inlets may be manually or automatically adjustable, e.g. using sensor/s controlling valves or other regulation, such as taps, as to the amount of water volume entering into the collection chamber per time unit.

Further, by the invention, it has been realized, that the water inlet/s 170, 170a,..170f may further be adapted for function even before and/or after any backflow condition is present. Thus, the system is suitable for collection and holding, optionally also pumping away the inlet water, even before a backflow is present inside the sewer pipe. This reduces the total water pressures experienced by the communal sewer pipe or pipes, even before a water crisis is starting.

In Fig. 2 is shown a second embodiment of the system according to the invention. It generally shows the same components as in Fig. 1A and 1B, however the system comprises two separate chambers 122 and 122a. The first chamber 122 is the collection chamber and the second chamber is a further chamber, a containment chamber 122a for securing the integrity of the closure valve even during e.g. gas accumulations or water overflow inside the collection chamber 122. The two chambers 122, 122a are separated by a solid containment wall 180, which may be made of any suitable material, dimension and shape. In Fig. 2 the containment wall 180 is made of steel and attached, e.g. by welding, to the container side walls, extending from one part of the container side wall to another part of the side wall, which is shown in cross section in this top side view. The wall 180 also extends vertically up and down, being attached to and along the bottom side wall of the container 120, and to and along a container lid, in that case, at least when the lid is closed. The wall 180 is provided surrounding the outside of the sewer pipe 140 at a position between the position of the overflow opening 144 and the closure valve 144. Emergency power supply may preferably be provided within the second chamber 122a, in order to protect it from moisture or explosion, at least for supplying the closure valve 142.

In Fig. 3 is shown an embodiment of the system according to the invention (not all system components are shown). The pressure pipe 150 is connected to a flushing well 190 filled with sand or gravel, and where an exit opening 150a of the pressure pipe 150 is located in a bottom part of the flushing well 190. Thus, the pressure of the wastewater mixture being pumped under pressure by the two pumps 160 and 160a through the pressure pipe 150 and into the flushing well 190 can be reduced to around atmospheric pressure and be safely delivered via a delivery pipe 200 to a side of a communal sewer pipe 300. The larger diameter sewer pipes often require such atmospheric pressure conditions according to their building regulations. The schematic Fig. 3 shows the pressure pipe 150 as extending horizontally through the ground after leaving a side wall of the container 120 of the system through a pressure pipe opening in the container side wall. In alternatives, the pipe 150 is provided along or above the ground. In Fig. 3a is shown a system comprising two pumps supplying one pressure pipe 150. The container 120 of the system may be a pre-existing access well, transformed into a part of the system.

In Denmark, private or building sewer pipes generally have a cross sectional diameter in the order of around 20 cm or lower, while communal sewer pipes generally have larger than 20 cm cross sectional diameter.

## Claims

1. A method for preventing backflow of wastewater into a sewer pipe, whereby a system (1) is used, said system (1) comprising
- at least a first container (120) comprising at least one collection chamber (122) in fluid communication with at least a first sewer pipe (140) for leading wastewater, said at least first sewer pipe being provided with at least a first closure valve (142) for blocking the at least one sewer pipe when there is a backflow present therein, where said at least first sewer pipe is provided with at least one overflow opening (144) adapted for allowing the overflow into the at least first collection chamber (122) of wastewater received in the at least first sewer pipe (140), at least when the at least first closure valve (142) is blocked,
- at least one pressure pipe (150), and
- at least one pump (160),
**the method being characterised by the steps**
- connecting the at least first container (120) to the at least first sewer pipe (140), and
- connecting the at least one pressure pipe (150) to the at least one pump (160), which pump pumps said wastewater from the at least one collection chamber (122) to said at least one pressure pipe (150), said at least one pressure pipe being connected to a communal sewer system via a flushing well.

2. A method according to claim 1, wherein the system (1) comprises at least one water inlet (170) being adapted to at least allow further water in addition to said wastewater inside said at least one collection chamber (122) at least when the at least one closure valve (142) is blocked.

3. A method according to claim 1, where said at least one water inlet (170) is one or more of the group including a) the at least one sewer pipe itself (140), b) a further sewer pipe (140a), c) a gutter pipe or entry (170a), d) a rain water down pipe (170b), e) a floor drain pipe lead (170c), f) a groundwater one-way valve (170d), g) a tap water line (170e), and h) a control valve (170f) on or after the closure valve (142).

4. A method according to any of the preceding claims, comprising a plurality of sewer pipes (140, 140a, 140b..), preferably providing said at least one overflow opening (144) of said at least one, a plurality, or all of the sewer pipes at an intersection of said plurality of sewer pipes.

5. A method according to any of the preceding claims, where the at least one water inlet (170) is adjusted as to the volume of water allowed in per time unit, and preferably said at least one water inlet is initiated and/or is adjusted according to selected levels of wastewater inside the at least first container.

6. A method according to any of the preceding claims, where the at least one closure valve (142) unblocks again when pressure sensor/s senses the pressure of the backflow being at least equal to the wastewater flow pressure at the overflow opening, optionally a pressure sensor is provided at the overflow opening.

7. A method according to any of the preceding claims, where the at least one collection chamber (122) is a closed chamber, preferably adhering to the European Standard DS/EN 13598-2.

8. A method according to any of the preceding claims, where the container comprises at least two separate chambers, namely said at least first collection chamber (122) accommodating the at least one pressure pipe (150), the at least one pump (160) and at least in fluid communication with the at least one overflow opening (144) on the at least one sewer pipe (140), and
at least one further chamber (122a) accommodating at least part of the at least one closure valve (142).

9. A method according to claim 8, where the at least two chambers (122, 122a) are fluid and/or gas tight separated from each other, preferably by a containment wall (180).

10. A method according to any of the preceding claims, where the at least one container comprises only one chamber, namely the first collection chamber.

11. A method according to any of the preceding claims, where the at least one pump (160) pumps at least while the at least one closure valve (142) is blocked.

12. A method according to any of the preceding claims, further comprising communal or local emergency power supply supplying said at least one pump (160) and/or said at least one valve (142), where said local power supply comprises one or more from a selection of a diesel generator, a diesel motor, a battery element optionally for regeneration, optionally with a solar cell.

13. A method according to claim 12 based on claim 7 or 8, where said emergency power supply is provided inside said at least one further chamber.

14. A method according to any of the preceding claims, where the at least one collection chamber does or does not accommodate at least part of said at least one sewer pipe.

15. A method according to any of the preceding claims, wherein at least a section of the at least one sewer pipe is de- and/or re-mounted, and preferably provided in a part of the sewer pipe extending between inner side walls of the container, more preferably between one inner side wall of the container and the closure valve, optionally between one inner side wall of the container and the containment wall.

## Patentansprüche

1. Verfahren zum Verhindern des Rückflusses von Abwasser in ein Abwasserrohr, wobei ein System (1) verwendet wird, wobei das System (1)
- mindestens einen ersten Behälter (120), der mindestens eine Sammelkammer (122) in Fluidverbindung mit mindestens einem ersten Abwasserrohr (140) zum Leiten des Abwassers aufweist, wobei das mindestens erste Abwasserrohr mit mindestens einem ersten Verschlussventil (142) zum Blockieren des mindestens einen Abwasserrohrs versehen ist, wenn ein Rückfluss darin vorhanden ist, wobei das mindestens erste Abwasserrohr mit mindestens einer Überlauföffnung (144) versehen ist, die angepasst ist, um den Überlauf von Abwasser, das in dem mindestens ersten Abwasserrohr (140) aufgenommen wird, in die mindestens erste Sammelkammer (122), zumindest wenn das mindestens erste Verschlussventil (142) geschlossen ist, zu ermöglichen,
- mindestens ein Druckrohr (150), und
- mindestens eine Pumpe (160) aufweist,
**wobei das Verfahren durch die Schritte gekennzeichnet ist:**
- Verbinden des mindestens ersten Behälters (120) mit dem mindestens ersten Abwasserrohr (140), und
- Verbinden des mindestens einen Druckrohrs (150) mit der mindestens einen Pumpe (160), die das Abwasser von der mindestens einen Sammelkammer (122) zu dem mindestens einen Druckrohr (150) pumpt, wobei das mindestens eine Druckrohr über eine Spülöffnung mit einem kommunalen Abwassersystem verbunden ist.

2. Verfahren nach Anspruch 1, wobei das System (1) mindestens einen Wassereinlass (170) aufweist, der so angepasst ist, dass er mindestens weiteres Wasser zusätzlich zu dem Abwasser in der mindestens einen Sammelkammer (122) zulässt, zumindest wenn das mindestens eine Verschlussventil (142) geschlossen ist.

3. Verfahren nach Anspruch 1, wobei der mindestens eine Wassereinlass (170) ein oder mehrere der Gruppe ist, die a) das mindestens eine Abwasserrohr selbst (140), b) ein weiteres Abwasserrohr (140a), c) ein Gossenrohr oder -einlass (170a), d) ein Regenwasserfallrohr (170b), e) eine Bodenablaufrohrleitung (170c), f) ein Grundwasser-Einwegventil (170d), g) eine Leitungswasserleitung (170e), und h) ein Steuerventil (170f) an oder nach dem Verschlussventil (142) umfasst.

4. Verfahren nach einem der vorhergehenden Ansprüche, umfassend eine Vielzahl von Abwasserrohren (140, 140a, 140b...), wobei vorzugsweise die mindestens eine Überlauföffnung (144) des mindestens einen, einer Vielzahl oder aller Abwasserrohre an einem Schnittpunkt der Vielzahl von Abwasserrohren vorgesehen ist.

5. Verfahren nach einem der vorhergehenden Ansprüche, wobei der mindestens eine Wassereinlass (170) in Bezug auf das pro Zeiteinheit zulässige Wasservolumen eingestellt wird, und vorzugsweise der mindestens eine Wassereinlass entsprechend ausgewählten Abwasserspiegeln in dem mindestens ersten Behälter initiiert und/oder eingestellt wird.

6. Verfahren nach einem der vorhergehenden Ansprüche, wobei sich das mindestens eine Verschlussventil (142) wieder öffnet, wenn ein Drucksensor/en erfasst/en, dass der Druck des Rückflusses mindestens gleich dem Abwasserdurchflussdruck an der Überlauföffnung ist, wobei gegebenenfalls ein Drucksensor an der Überlauföffnung vorgesehen ist.

7. Verfahren nach einem der vorhergehenden Ansprüche, wobei die mindestens eine Sammelkammer (122) eine geschlossene Kammer ist, vorzugsweise unter Einhaltung der Europäischen Norm DS/EN 13598-2.

8. Verfahren nach einem der vorhergehenden Ansprüche, wobei der Behälter mindestens zwei getrennte Kammern aufweist, nämlich die mindestens erste Sammelkammer (122), die das mindestens eine Druckrohr (150), die mindestens eine Pumpe (160) aufnimmt, und mindestens in Fluidverbindung steht mit der mindestens einen Überlauföffnung (144) an dem mindestens einen Abwasserrohr (140), und mindestens eine weitere Kammer (122a), die mindestens einen Teil des mindestens einen Verschlussventils (142) aufnimmt.

9. Verfahren nach Anspruch 8, wobei die mindestens zwei Kammern (122, 122a) fluid- und/oder gasdicht voneinander getrennt sind, vorzugsweise durch eine Einschließungswand (180).

10. Verfahren nach einem der vorhergehenden Ansprüche, wobei der mindestens eine Behälter nur eine Kammer, nämlich die erste Sammelkammer, aufweist.

11. Verfahren nach einem der vorhergehenden Ansprüche, wobei die mindestens eine Pumpe (160), mindestens während das mindestens eine Verschlussventil (142) geschlossen ist, pumpt.

12. Verfahren nach einem der vorhergehenden Ansprüche, das ferner eine kommunale oder lokale Notstromversorgung umfasst, die die mindestens eine Pumpe (160) und/oder das mindestens eine Ventil (142) versorgt, wobei die lokale Stromversorgung eine oder mehrere aus einer Auswahl eines Dieselgenerators, eines Dieselmotors, eines Batterieelements, das gegebenenfalls zur Regeneration vorgesehen ist, gegebenenfalls mit einer Solarzelle, aufweist.

13. Verfahren nach Anspruch 12 auf der Grundlage von Anspruch 7 oder 8, wobei die Notstromversorgung innerhalb der mindestens einen weiteren Kammer vorgesehen ist.

14. Verfahren nach einem der vorhergehenden Ansprüche, wobei die mindestens eine Sammelkammer mindestens einen Teil des mindestens einen Abwasserrohrs aufnimmt oder nicht aufnimmt.

15. Verfahren nach einem der vorhergehenden Ansprüche, wobei mindestens ein Abschnitt des mindestens einen Abwasserrohrs de- und/oder wieder montiert wird, und vorzugsweise in einem Teil des Abwasserrohrs vorgesehen wird, der sich zwischen den inneren Seitenwänden des Behälters, vorzugsweise zwischen einer inneren Seitenwand des Behälters und dem Verschlussventil, gegebenenfalls zwischen einer inneren Seitenwand des Behälters und der Einschließungswand, erstreckt.

## Revendications

1. Méthode pour empêcher le retour d'eaux usées dans un tuyau d'égout, selon laquelle un système (1) est utilisé, ledit système (1) comprenant
- au moins un premier contenant (120) comprenant au moins une chambre de collecte (122) en communication fluidique avec au moins un premier tuyau d'égout (140) pour mener les eaux usées, ledit au moins un premier tuyau d'égout étant pourvu d'au moins une première soupape de fermeture (142) pour bloquer l'au moins un tuyau d'égout lorsqu'un retour y est présent, où ledit au moins un premier tuyau d'égout est pourvu d'au moins une ouverture de trop-plein (144) adaptée pour admettre le trop-plein dans l'au moins une première chambre de collecte (122) d'eaux usées reçues dans l'au moins un premier tuyau d'égout (140), au moins lorsque l'au moins une première soupape de fermeture (142) est bloquée,
- au moins un tuyau de pression (150), et
- au moins une pompe (160),
la méthode étant **caractérisée par** les étapes suivantes
- le raccordement de l'au moins un premier contenant (120) à l'au moins un premier tuyau d'égout (140), et
- le raccordement de l'au moins un tuyau de pression (150) à l'au moins une pompe (160), laquelle pompe pompe lesdites eaux usées depuis ladite au moins une chambre de collecte (122) jusqu'audit au moins un tuyau de pression (150), ledit au moins un tuyau de pression étant raccordé à un système d'égout communal via un puits de chasse.

2. Méthode selon la revendication 1, dans laquelle le système (1) comprend au moins une prise d'eau (170) étant adaptée pour au moins admettre de l'eau supplémentaire en plus desdites eaux usées à l'intérieur de ladite au moins une chambre de collecte (122) au moins lorsque l'au moins une soupape de fermeture (142) est bloquée.

3. Méthode selon la revendication 1, où ladite au moins une prise d'eau (170) est un ou plusieurs du groupe comportant a) l'au moins un tuyau d'égout (140) lui-même, b) un tuyau d'égout supplémentaire (140a), c) un tuyau ou une entrée de caniveau (170a), d) un tuyau de descente d'eaux pluviales (170b), e) un guide de tuyau d'évacuation dans le sol (170c), f) une soupape de non-retour d'eaux souterraines (170d), g) une canalisation d'eau du robinet (170e), et h) une soupape de commande (170f) sur ou après la soupape de fermeture (142).

4. Méthode selon l'une quelconque des revendications précédentes, comprenant une pluralité de tuyaux d'égout (140, 140a, 140b...), de préférence la fourniture de ladite au moins une ouverture de trop-plein (144) dudit au moins un, d'une pluralité, ou de la totalité des tuyaux d'égout à une intersection de ladite pluralité de tuyaux d'égout.

5. Méthode selon l'une quelconque des revendications précédentes, où l'au moins une prise d'eau (170) est réglée par rapport au volume d'eau admis par unité de temps, et de préférence ladite au moins une prise d'eau est amorcée et/ou réglée selon des niveaux sélectionnés d'eaux usées à l'intérieur de l'au moins un contenant.

6. Méthode selon l'une quelconque des revendications précédentes, où l'au moins une soupape de fermeture (142) se débloque à nouveau lorsqu'un ou des capteurs de pression détectent la pression de retour qui est au moins égale à la pression d'écoulement d'eaux usées au niveau de l'ouverture de trop-plein, facultativement un capteur de pression est prévu au niveau de l'ouverture de trop-plein.

7. Méthode selon l'une quelconque des revendications précédentes, où l'au moins une chambre de collecte (122) est une chambre fermée, adhérant de préférence à la norme européenne DS/EN 13598-2.

8. Méthode selon l'une quelconque des revendications précédentes, où le contenant comprend au moins deux chambres séparées, à savoir ladite au moins une première chambre de collecte (122) logeant l'au moins un tuyau de pression (150), l'au moins une pompe (160) et étant au moins en communication fluidique avec l'au moins une ouverture de trop-plein (144) sur l'au moins un tuyau d'égout (140), et
au moins une chambre supplémentaire (122a) logeant au moins une partie de l'au moins une soupape de fermeture (142).

9. Méthode selon la revendication 8, où les au moins deux chambres (122, 122a) sont séparées l'une de l'autre de manière étanche aux fluides et/ou aux gaz, de préférence par une paroi de confinement (180).

10. Méthode selon l'une quelconque des revendications précédentes, où l'au moins un contenant comprend uniquement une chambre, à savoir la première chambre de collecte.

11. Méthode selon l'une quelconque des revendications précédentes, où l'au moins une pompe (160) pompe au moins pendant que l'au moins une soupape de fermeture (142) est bloquée.

12. Méthode selon l'une quelconque des revendications précédentes, comprenant en outre une alimentation électrique d'urgence communale ou locale alimentant ladite au moins une pompe (160) et/ou ladite au moins une soupape (142), où ladite alimentation électrique locale comprend un ou plusieurs parmi une sélection d'un groupe électrogène diesel, d'un moteur diesel, d'un élément de batterie facultativement pour une régénération, facultativement avec une pile solaire.

13. Méthode selon la revendication 12 lorsqu'elle est basée sur la revendication 7 ou 8, où ladite alimentation électrique d'urgence est fournie à l'intérieur de ladite au moins une chambre supplémentaire.

14. Méthode selon l'une quelconque des revendications précédentes, où l'au moins une chambre de collecte loge ou non au moins une partie dudit au moins un tuyau d'égout.

15. Méthode selon l'une quelconque des revendications précédentes, dans laquelle au moins une section de l'au moins un tuyau d'égout est démontée et/ou remontée, et de préférence fournie dans une partie du tuyau d'égout s'étendant entre des parois de côté intérieur du contenant, de manière davantage préférée entre une paroi de côté intérieur du contenant et la soupape de fermeture, facultativement entre une paroi de côté intérieur du contenant et la paroi de confinement.
